# EUROPEAN PATENT APPLICATION

(11) **EP 3 528 148 A1**
(43) Date of publication of application: **21.08.2019**
(21) Application number: 18157414.6
(22) Date of filing: 19.02.2018
(51) Int. Cl.: G06F 21/00, H04L 29/08, H04L 29/06, H04L 12/18, G06Q 10/08

(54) **METHOD AND SYSTEM FOR PROVIDING A NOTIFICATION FROM A PROVIDER TO A CONSUMER FOR PROVIDING THE NOTIFICATION TO A USER GROUP**

(71) Applicant: Siemens Aktiengesellschaft, 80333 München (DE)
(72) Inventor: The designation of the inventor has not yet been filed

(57) **Abstract**

The present disclosure is directed to a system (700) and a method for providing a notification (1) from a provider (2) to a consumer (3) for providing the notification (1) to a user group (4), the method comprising, through operation of at least one processor (1302):
receiving a first message (21) from the provider (2) informing about the availability of a type of information (3) at the provider (2);
receiving a second message (22) from the consumer (4) including a consumer identification (6), a user group identification (7), consumer access rights (8), and user group access rights (9) to types of information (5);
receiving a third message (23) from the consumer (3) including a request (10) to receive the type of available information (5);
checking the consumer identification (6), the user group identification (7), the consumer access rights (8), and the user group access rights (9) to receive the requested type of available information (5); and
if the consumer (3) and the user group (4) have been identified and have access rights (8, 9) to receive the requested type of available information (5): establishing a communication path (20) from the provider (2) to the consumer (3) allowing for transmission of the notification (1) from the provider (2) to the consumer (3).

## Description

The present invention generally relates to the industrial internet of things (IIoT), an IIoT or cloud platform and to cloud computing, and more particularly relates to a method and system for providing a notification from a provider to a consumer for providing the notification to a user group.

With the advent of cloud computing, industrial assets (e.g., motors, robots, industrial equipments, automation devices, etc.) positioned in an industrial plant are connected to a cloud platform via agents (IoT gateway). The cloud platform enables commissioning, configuring, monitoring, controlling, maintenance of assets or industrial set up from remote location. To provide this, the cloud platform is configured for storing models of assets, real-time operational data, etc, analyze the data, issue control commands to control a condition or asset, provide assistance during maintenance, and provide insights to the tenant/user of cloud platform. This is achieved by deploying and provisioning cloud-based apps, services, simulation models, digital twins, engineering configuration, code snippets, APIs and so on. In general, these are known as artifacts. Each of the artifacts may be developed and deployed to serve a purpose (e.g., condition monitoring, trend analysis, predictive maintenance and so on). These artifacts are then provisioned to tenants for managing the industrial set-up. Generally, these artifacts require certain information as an input in order to serve that specific purpose.

Currently, there exist solutions which support subscriptions to notifications, e.g. polling for data or for notifications. Such solutions may benefit from improvements.

According to a first aspect of the invention, a method for providing a notification from a provider to a consumer for providing the notification to a user group may include, through operation of at least one processor: receiving a first message from the provider informing about the availability of a type of information at the provider; receiving a second message from the consumer including a consumer identification, a user group identification, consumer access rights, and user group access rights to types of information; receiving a third message from the consumer including a request to receive the type of available information; checking the consumer identification, the user group identification, the consumer access rights, and the user group access rights to receive the requested type of available information; and if the consumer and the user group have been identified and have access rights to receive the requested type of available information: establishing a communication path from the provider to the consumer allowing for transmission of the notification from the provider to the consumer.

According to a second aspect of the invention, a method for receiving a notification from a provider by a consumer for providing the notification to a user group may include, through operation of at least one processor: receiving a first message from the provider informing about the availability of a type of information at the provider; sending a second message to a managing module including a consumer identification, a user group identification, consumer access rights, and user group access rights receive types of information; sending a third message to the managing module including a request to receive the type of available information; and if the consumer and the user group have been identified and have access rights to receive the requested type of available information: receiving the notification via a communication path from the provider to the consumer.

According to a third aspect of the invention, a method for providing a notification to a consumer for providing the notification to a user group may include, through operation of at least one processor: sending a first message to a managing module informing about the availability of a type of information at the provider; sending a sixth message to the managing module including a provider identification and provider authorization rights to provide the type of information; and if the provider has been identified and has authorization rights to provide the type of information: sending the notification via a communication path from the provider to the consumer allowing for transmission of the notification from the provider to the consumer.

According to a fourth aspect of the invention, a system for providing a notification from a provider to a consumer for providing the notification to a user group may include at least one processor configured via executable instructions included in at least one memory to: receive a first message informing about the availability of a type of information at the provider; receive a second message from the consumer including a consumer identification, a user group identification, consumer access rights, and user group access rights to receive types of information; receive a third message from the consumer including a request to receive the type of available information; check the consumer identification, user group identification, consumer access rights, and user group access rights to receive the requested type of available information; and if the consumer and the user group have been identified and have access rights to receive the requested type of available information: establish a communication path from the provider to the consumer allowing for transmission of the notification from the provider to the consumer.

By way of example the first message may be sent to the consumer by the managing module or the provider.

According to a fifth aspect of the invention, a computer readable medium encoded with executable instructions (such as a software component on a storage device) that when executed, cause at least one processor to carry out at least one of the described methods. The computer readable medium may, by way of example, be non-transitory. Furthermore, a further example may include a computer program and/or a computer program product that when executed, causes at least one processor to carry out at least one of the described methods. Additionally, yet a further example may include a data stream which is representative of a method or a system for providing a notification from a provider to a consumer for providing the notification to a user group as described above and below.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

The suggested methods and system may be used to securely provide notifications from providers to consumers. This may be achieved by using a managing module which checks required access rights for consumers and/or authorization rights for providers. The managing module may only establish a communication path from a provider to a consumer if the required access rights and/or authorization rights are present. Generally, in cases in which the above-mentioned if-condition is not fulfilled, no corresponding communication path shall be established so that the corresponding notification is not transmitted. Furthermore, the chronological order of the first message to sixth message (if applicable and present) is not essential for the suggested methods and system so that the chronological order of the messages may be chosen to at one's discretion.

In addition, by way of example, one or more providers and/or one or more consumers providing the notification(s) to corresponding one or more user groups may be present so that one or more corresponding communication paths may be established. Such communication paths may include a communication path between one provider and two or more consumers providing the notification(s) to corresponding to or more user groups. Such communication paths may further include another communication path between two or more providers and one consumer providing the notification(s) to a corresponding user group. Furthermore, such communication paths may further include yet another communication path between two or more providers and two or more consumers providing the notification(s) to corresponding to or more user groups.

Without loss of generality and simply for the purpose of illustration, the suggested methods and system are now discussed in the frame of an exemplary application.

In the example, information may e.g. be related or include to time series data like physical quantities measured by sensors, key performance indices (KPIs) of industrial plants, a plant status, information on a plant's assets, data derived of such quantities, etc. The corresponding type of information may be a time series, a KPI, etc. The notification may relate to an event, an alarm or to the mentioned information in general, whereby the notification typically relates to or is derived from the information. Such events may include, e.g. connecting or disconnecting an asset to a plant.

The provider providing the basic or the notification may be hardware, like a sensor or a part of an industrial plant or complete industrial plants, or software, e.g. the above-mentioned app, a mobile app, a web application, a service, an artifact or a more complex software system, like a SCADA software (supervisory control and data acquisition) or another industrial control software system of an industrial plant which may by way of example be cloud-based. In particular, the provider may be a software module for asset management in the context of the cloud environment. By way of example, the asset management may manage the available assets within the cloud platform or assets connected to the cloud platform which means that the corresponding software module may e.g. register new assets and delete superfluous assets in the asset management of the cloud. Hence, the information or the notification may also involve the information that an asset has been created or deleted. In another example, the provider may also be a cloud-based app from a third party which is a customer of the operator of the cloud platform and which does not have management authorizations with respect to the cloud platform.

The consumer to which the notification is provided may be the above-mentioned app, a mobile app, a web application, a service, an artifact or a more complex software system, like a SCADA software or another industrial control software system of an industrial plant which may by way of example be cloud-based. In particular, the consumer may be a cloud-based app from a third party as mentioned above. An important feature is that eventually, the notification may be provided to a user group, whereby generally several groups with several users per group may be present. However, the group may - at least temporarily - also include only one user. In the context of the IIoT platform, the user group may be understood as a tenant. Typically, a tenant may be considered as a user group who share a common access with specific privileges to a software instance, i.e. the IIoT platform. Furthermore, a tenant or user group may create, manage and delete sub-tenants or sub-groups of users. As an example, a machine tool manufacturer may be a tenant or a user group. The machine tool manufacturer may have several customers, e.g. carmakers that have several production plans, so that each customer or each customer's production plant may be a sub-tenant or sub-group. Each user group, e.g. tenant, and if applicable and equipped with sufficient authorization rights each sub-group, e.g. sub-tenant, may have access to the cloud-based app or artifact, i.e. consumer. In the suggested method and system the notification is provided to the consumer, e.g. a cloud-based app or artifact, which then can provide the notification further to the user group, e.g. tenant.

For security and privacy reasons, only properly identified and authorized consumers may be provided with notifications. To this end, the consumer has a consumer identification and consumer access rights to receive certain types of information. Furthermore, the user group has a user group identification and user group access rights to receive certain types of information. The mentioned identification and access rights of the consumer, e.g. a cloud-based app or artifact, may be defined by the developer or the creator of the consumer or by the IIoT or cloud platform operator. Similarly, the mentioned identification and access rights of the user group, e.g. a tenant, may also be defined by the developer or the creator of the consumer or by the IIoT or cloud platform operator. Typically, however, the identification and access rights of a sub-user group, e.g. sub-tenant, are defined by the corresponding, superordinate user group, e.g. tenant, which typically only can provide access rights within the boundaries of its own access rights.

In further examples, the provider may send a sixth message to the managing module including a provider identification and provider authorization rights to provide a type of information. The provider may further send the notification via a communication path from the provider to the consumer allowing for transmission of the notification from the provider to the consumer if the provider has been identified and has authorization rights to provide the type of information. For security and privacy reasons and in particular for providers being a cloud-based app from a third party, only properly identified and authorized providers may send notifications. To this end, the provider has a provider identification and provider authorization rights to send certain types of information. The mentioned identification and authorization rights of the provider may be defined by the developer or the creator of the provider or by the IIoT or cloud platform operator. In some examples of providers being a cloud-based app from a third party, a provider user group may have a provider user group identification and provider group authorization rights to send certain types of information. Similarly, the mentioned identification and access rights of the provider user group, e.g. a provider tenant, may also be defined by the developer or the creator of the provider or by the IIoT or cloud platform operator. Typically, however, the identification and access rights of a provider sub-user group, e.g. provider sub-tenant, are defined by the corresponding, superordinate provider user group, e.g. provider tenant, which typically only can provide authorization rights within the boundaries of its own authorization rights.

In order to carry out the required steps a cloud or IIoT platform may be provided which includes a managing module. The managing module may be understood as some kind of message broker. However, other solutions that provide for the same functionalities may easily be derived by a person skilled in the art.

By way of example, the managing module may receive a first message from the provider informing about the availability of a type of information at the provider. The first message may e.g. inform about the availability of a new time series, like measured sensor data of a newly-installed or newly-added sensor. The managing module may further receive a second message from the consumer including a consumer identification, a user group identification, and access rights of the consumer and the user group to types of information. Further, the managing module may receive a third message from the consumer including a request to receive the type of available information. This means that the consumer may select a specific type of information and may inform the managing module that corresponding information or notification shall be sent to the consumer. Preferably the selected type of information is available from the provider. In order to safeguard sufficient security and privacy the managing module may check the received consumer identification, user group and access rights to receive the requested type of available information. If the consumer and the user group have been identified and have access rights to receive the requested type of available information, managing module may establish a communication path from the provider to the consumer allowing for transmission of the notification from the provider to the consumer.

In further examples, the second message and the third message may be combined to one single message including at least a consumer identification, a user group identification, access rights of the consumer and the user group to types of information, and a request to receive the type of available information.

In some examples, the cloud or IIoT platform may include an authorization module in which the different identifications, access rights, and if applicable authorization rights are stored for later checks. By way of example the managing module may comprise such an authorization module.

Eventually, the notification may be sent from the provided to the consumer using the established communication path from the provider to the consumer which may then provide the notification to the user group.

By way of example, the method may further comprise through operation of the at least one processor causing the consumer to provide the notification to the user group.

For this step, the check of the user group identity and the user group's access rights to receive the specific type of information or notification is taken into account. This ensures that only user groups or users with sufficient access rights are provided with the notification. The check of the user group and access rights may, by way of example be performed by the above-mentioned managing module. In other examples, this check may be carried out by the consumer. To this end the consumer may be provided with sufficient information concerning the user group and its access rights in order to carry out a meaningful check.

In this context, the consumer may provide the notification to the user group. Optionally the consumer takes the user group identification and user group access rights, whereby the notification is only provided to the user group is the user group has properly been identified and has access rights to receive the notification.

The notification may be provided to the user group by sending a text message, e.g. short message service (SMS), instant messaging, email, or the like, to the user group. The notification may further be provided to the user group by displaying the notification in a display with a graphical user interface to the user group. The display may, e.g. be part of a mobile device or stationary device of the respective user or the user group.

It should also be appreciated that, by way of example, the method may further comprise through operation of the at least one processor receiving a fourth message from the consumer including a query on the types of available information.

The query of the consumer concerning the types of available information may facilitate a match between the types of available information from one or more providers on one hand and a request to receive a specific type of information from the consumer on the other hand. To this end, the consumer may send the fourth message to the managing module in order to be informed about what types of information are currently available. Sending the fourth message may e.g. be triggered by a corresponding query from a user group.

In example embodiments, the method may further comprise through operation of the at least one processor sending a fifth message to the consumer including first data on the availability of the type of information.

The fifth message may, for example, be sent from the managing module to the consumer. The fifth message may include first data on the availability of a specific type of information which may facilitate a match between the types of available information from one or more providers on one hand and a request to receive a specific type of information from the consumer on the other hand.

In example embodiments, the notification may include second data about a change of information and/or the information.

This means that the notification may include, e.g. time series data like physical quantities measured by sensors, key performance indices (KPIs) of industrial plants, a plant status, information on a plant's assets, data derived of such quantities, etc. The notification may further or alternatively include data about a change of information, e.g. time series data exceeding a given threshold, a new plant status, information on a plant's newly connected or disconnected asset, new KPIs, an alarm or alert information, etc.

In further examples, the method may further comprise through operation of the at least one processor causing to create a sending module in the provider specific to the type information; causing to create a receiving module in the consumer specific to the type information; and causing the sending module of the provider to send the notification to the receiving module of the consumer.

In this scenario, the managing module may trigger the provided to create a sending module which is specific to the type of information and may further trigger the consumer to create a receiving module which is specific to the type of information. Once the provider and the consumer have created the corresponding modules the managing module may trigger the sending module presented notification to the receiving module. This means that in this scenario a rather direct communication path between the provider and the consumer is created. By way of example, the consumer is equipped with the user group's access rights in order to provide the notification only to the user group having proper access rights to receive the type of available information or notification. In further examples, the provider only sends the notification to the consumer if the consumer's user group has been identified and has access rights to receive the requested type of available information or notification.

In further example embodiments, the method may further comprise through operation of the at least one processor sending the request of the consumer to receive the type of available information to the provider; receiving the notification from the provider; and if the consumer and the user group have been identified and have access rights to receive the requested type of available information: sending the notification to the consumer.

According to this scenario, the managing module may have received a request of the consumer to receive a specific type of available information. The managing module may then send this request to the provider which in return may send the notification to the managing module. This means that the managing module may receive the notification from the provider. If the consumer and the user group have been identified and have access rights to receive the requested type of available information, the managing module may send the notification to the consumer. This corresponds to a rather indirect communication path between the provider and the consumer via the managing module.

In example embodiments, this scenario may be an advanced version of a publish-subscribe pattern. This pattern is a messaging pattern where senders of messages, called publishers, do not program the messages to be sent directly to specific receivers, called subscribers, but instead categorize published messages into classes without knowledge of which subscribers, if any, there may be. Similarly, subscribers express interest in one or more classes and only receive messages that are of interest, without knowledge of which publishers, if any, there are. This pattern provides greater network scalability and a more dynamic network topology, with a resulting decreased flexibility to modify the publisher and the structure of the published data.

The described scenario may be advanced in comparison to the mentioned publish-subscribe pattern since it offers improved security and privacy features as explained above. In particular, the managing module may act as a filter which filters out notifications that would have been sent to consumers and/or user groups which either are not properly identified or do not have sufficient access rights.

Furthermore, the described scenario may be of particular advantage if the consumer is a cloud-based app from a third party. For such cases, for security and privacy reasons, it may be advisable to avoid a rather direct communication path between the provider and the consumer as outlined in the previous scenario.

By way of example, the method may further comprise through operation of the at least one processor receiving a sixth message from the provider including a provider identification and provider authorization rights to provide a type of information; checking the provider identification and provider authorization rights to provide the type of information; and if the provider has been identified and has authorization rights to provide the type of information: establishing a communication path from the provider to the consumer allowing for transmission of the notification from the provider to the consumer.

An important feature of this example is that the provider may communicate a provider identification and provider authorization rights for providing a specific type of information to the managing module. The managing module then may take the provider identification and provider authorization rights to provide the type of information. If the provider has been identified and has authorization rights to provide the type of information, the managing module may establish a communication path from the provider to the consumer allowing for transmission of the notification from the provider to the consumer.

The described of this example may be of particular advantage if the provider is a third party, in particular a cloud-based app from a third party. For such cases, for security and privacy reasons, it may be advisable to avoid a rather direct communication path between the provider and the consumer. Hence, by way of example, the communication path may be realized as the rather indirect communication path between the provider and the consumer via the managing module as described above.

It should also be appreciated that, by way of example, the consumer may be an application, e.g. a mobile app, a web application or a service, an artifact or a more complex software system which may by way of example be cloud-based. In example embodiments, the user group includes at least one tenant in a cloud platform and optionally at least one sub-tenant.

As mentioned above, by way of example, a machine tool manufacturer may be a tenant or a user group. The machine tool manufacturer may have several customers, e.g. carmakers that have several production plans, so that each customer or each customer's production plant may be a sub-tenant or sub-group.

As explained above, the tenant or user group may create, manage and delete sub-tenants or sub-groups of users. Each user group, e.g. tenant, and if applicable and equipped with sufficient authorization rights each sub-group, e.g. sub-tenant, may have access to the cloud-based app or artifact, i.e. consumer.

In further examples, the access rights and/or authorization rights are defined by one of a developer of the consumer and/or provider, an operator of a cloud platform, or any combination thereof.

The mentioned access rights may concern the consumer and/or the corresponding user group, in particular of the consumer. The mentioned authorization rights may concern the provider and/or the corresponding user group, in particular of the provider. The access rights or authorization rights may be defined by the developer of the consumer and or provider, respectively. Alternatively or in addition, these rights may be defined or limited by the operator of a cloud platform, in particular if the consumer and/or the provider is a cloud-based app or artifact.

As mentioned above, the identification and access rights of a sub-user group, e.g. sub-tenant, may be defined by the corresponding, superordinate user group, e.g. tenant, which typically only can provide access rights within the boundaries of its own access rights.

Another example may include a product or apparatus including at least one hardware, software, and/or firmware based processor, computer, component, controller, means, module, and/or unit configured for carrying out functionality corresponding to this described method.

The foregoing has outlined rather broadly the technical features of the present disclosure so that those skilled in the art may better understand the detailed description that follows. Features of the present invention which have been explained in the context of one of the exemplary methods may also be realized by the suggested system and computer readable medium which are adapted accordingly. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the spirit and scope of the disclosure in its broadest form.

Below, the invention is described using the embodiments illustrated in the figures.
Figs. 1 to 6 illustrate flow diagrams of a first to sixth example methodology that facilitate providing a notification from a provider to a consumer for providing the notification to a user group.
Figs. 7 to 12 illustrate schemes of a first to sixth exemplary system that facilitate providing a notification from a provider to a consumer for providing the notification to a user group.
Fig. 13 illustrates a block diagram of a data processing system in which an embodiment can be implemented.

Various technologies that pertain to systems and methods for providing a notification from a provider to a consumer for providing the notification to a user group will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

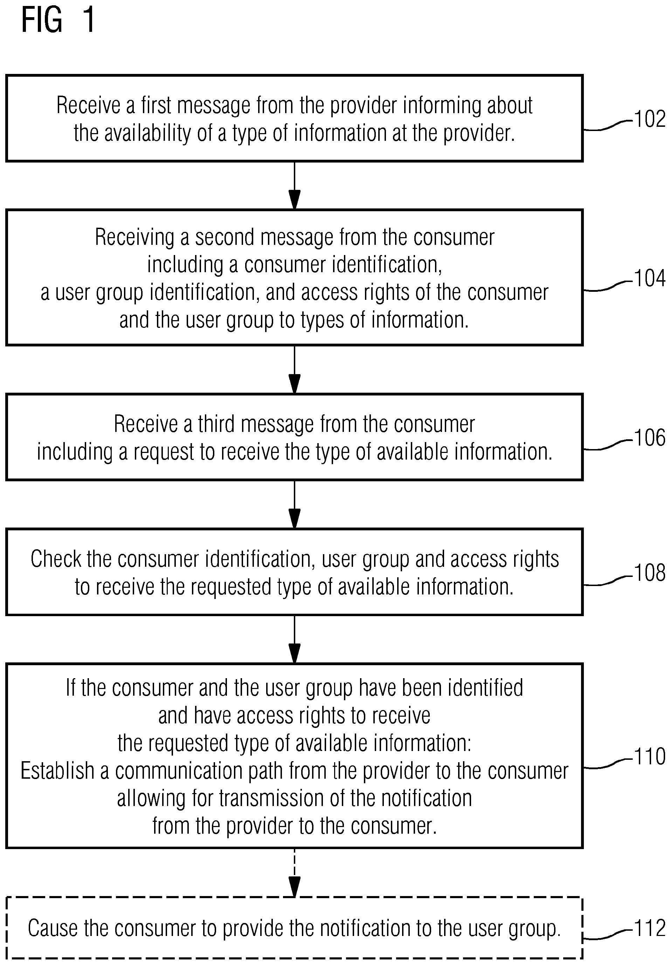

With reference to Fig. 1, a first example methodology is illustrated that facilitates providing a notification 1 from a provider 2 to a consumer 3 for providing the notification 1 to a user group 4.

The method may start, may then include several acts carried out through operation of at least one processor 1302, and may then end.

These acts may include an act 102 of receiving a first message 21 from the provider 2 informing about the availability of a type of information 3 at the provider 2; and an act of 104 of receiving a second message 22 from the consumer 4 including a consumer identification 6, a user group identification 7, consumer access rights 8, and user group access rights 9 to types of information 5; and an act of 106 of receiving a third message 23 from the consumer 3 including a request 10 to receive the type of available information 5; and an act of 108 of checking the consumer identification 6, the user group identification 7, the consumer access rights 8, and the user group access rights 9 to receive the requested type of available information 5; and an act of 110 of establishing a communication path 20 from the provider 2 to the consumer 3 allowing for transmission of the notification 1 from the provider 2 to the consumer 3 if the consumer 3 and the user group 4 have been identified and have access rights 8, 9 to receive the requested type of available information 5.

Optionally these acts may further include an act 112 of causing the consumer 3 to provide the notification 1 to the user group 4. By way of example, the notification 1 may be provided to the user group 4 by sending a text message 16 to the user group or by displaying the notification 1 in a display 16 with a graphical user interface to the user group 4.

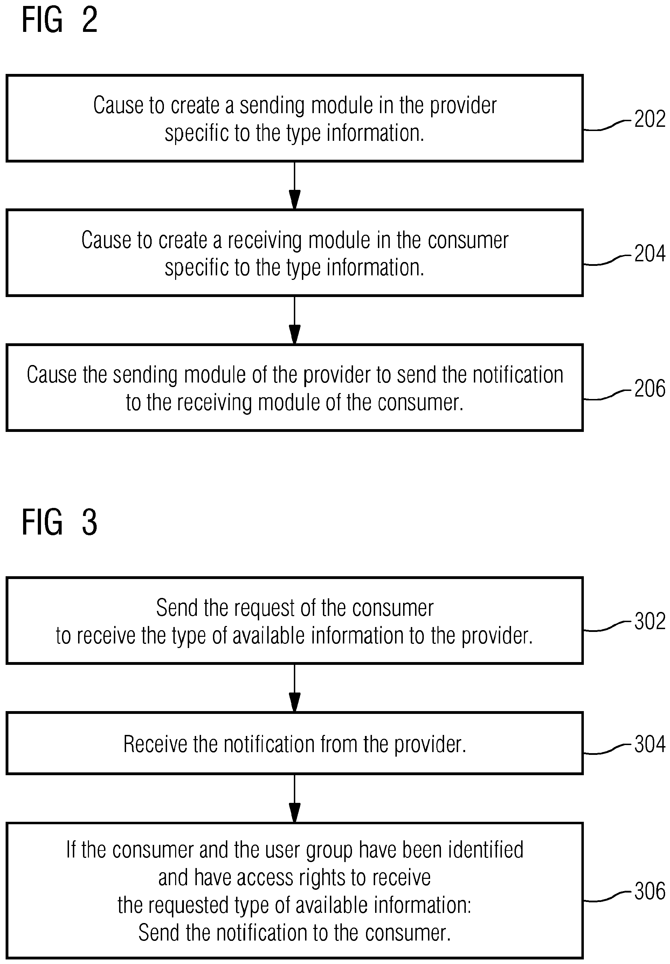

With reference to Fig. 2, a second example methodology is illustrated that facilitates providing a notification 1 from a provider 2 to a consumer 3 for providing the notification 1 to a user group 4.

The method may start, may then include several acts carried out through operation of at least one processor 1302, and may then end.

These acts may include the acts illustrated in Fig. 1 and explained in that context and may additionally include an act 202 of causing to create a sending module 32 in the provider 2 specific to the type information 5; an act 204 of causing to create a receiving module 33 in the consumer 3 specific to the type information 5; and an act 206 of causing the sending module 32 of the provider 2 to send the notification 1 to the receiving module 33 of the consumer 3.

With reference to Fig. 3, a third example methodology is illustrated that facilitates providing a notification 1 from a provider 2 to a consumer 3 for providing the notification 1 to a user group 4.

The method may start, may then include several acts carried out through operation of at least one processor 1302, and may then end.

These acts may include the acts illustrated in Fig. 1 and optionally Fig. 2 and explained in that context. Additionally, these acts may further include an act 302 of sending the request 10 of the consumer 3 to receive the type of available information 5 to the provider 2; an act 304 of receiving the notification 1 from the provider 2; and an act 306 of sending the notification 1 to the consumer 3 if the consumer 3 and the user group 4 have been identified and have access rights 8, 9 to receive the requested type of available information 5.

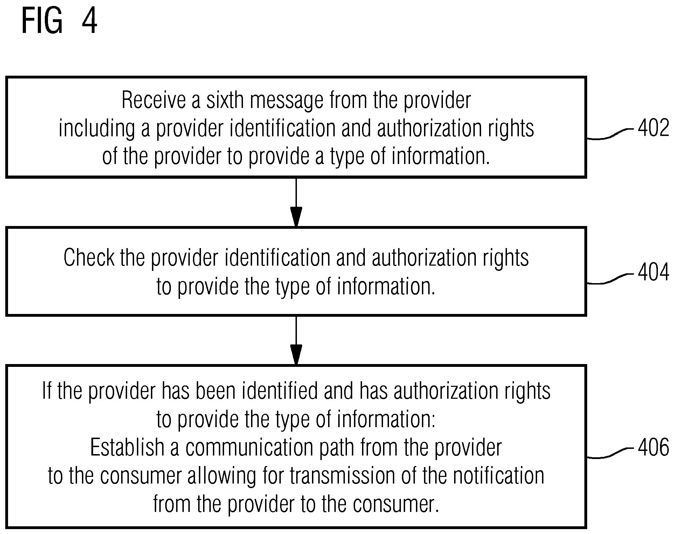

With reference to Fig. 4, a fourth example methodology is illustrated that facilitates providing a notification 1 from a provider 2 to a consumer 3 for providing the notification 1 to a user group 4.

The method may start, may then include several acts carried out through operation of at least one processor 1302, and may then end.

These acts may include the acts illustrated in Fig. 1 and optionally Fig. 2 and/or Fig. 3 and explained in that context. Additionally, these acts may further include an act 402 of receiving a sixth message 26 from the provider 2 including a provider identification 14 and provider authorization rights 15 to provide a type of information 5; an act 404 of checking the provider identification 14 and the provider authorization rights 15 to provide the type of information 5; and an act 406 of establishing a communication path 20 from the provider 2 to the consumer 3 allowing for transmission of the notification 1 from the provider 2 to the consumer 3 if the provider 2 has been identified and has authorization rights 15 to provide the type of information 5.

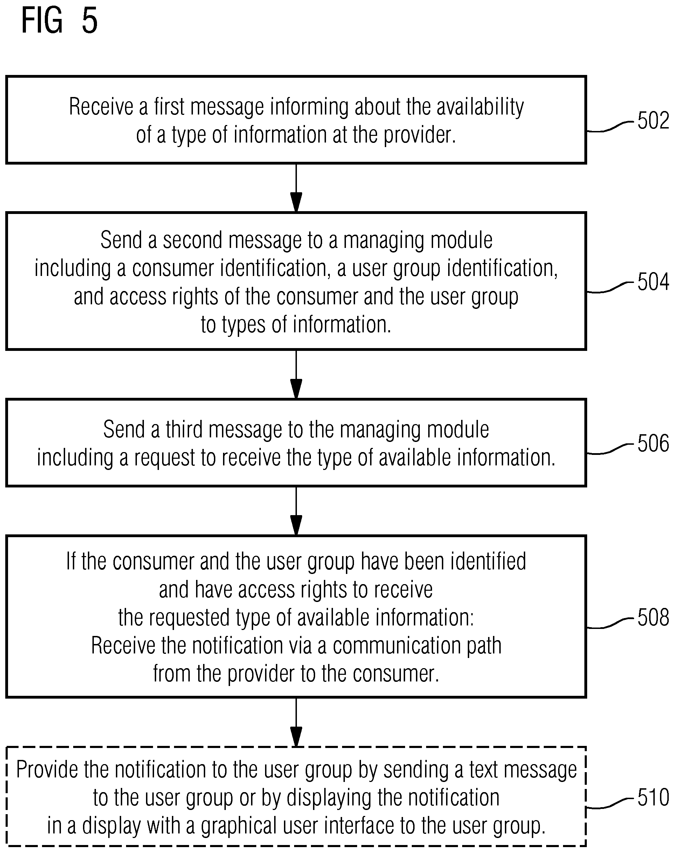

With reference to Fig. 5, a fifth example methodology is illustrated that facilitates providing a notification 1 from a provider 2 to a consumer 3 for providing the notification 1 to a user group 4.

The method may start, may then include several acts carried out through operation of at least one processor 1302, and may then end.

These acts may include an act 502 of receiving a first message 21 informing about the availability of a type of information 5 at the provider 2; an act 504 of sending a second message 22 to a managing module 31 including a consumer identification 6, a user group identification 7, consumer access rights 8, and user group access rights 9 receive types of information 5; an act 506 of sending a third message 23 to the managing module 31 including a request 10 to receive the type of available information 5; and an act 508 of receiving the notification 1 via a communication path 20 from the provider 2 to the consumer 3 if the consumer 3 and the user group 4 have been identified and have access rights 8, 9 to receive the requested type of available information 5.

By way of example the first message 21 may be sent to the consumer 3 from the managing module 31 or the provider 2.

Optionally these acts may further include an act 510 of providing the notification 1 to the user group 4 by sending a text message 16 to the user group or by displaying the notification 1 in a display 16 with a graphical user interface to the user group 4.

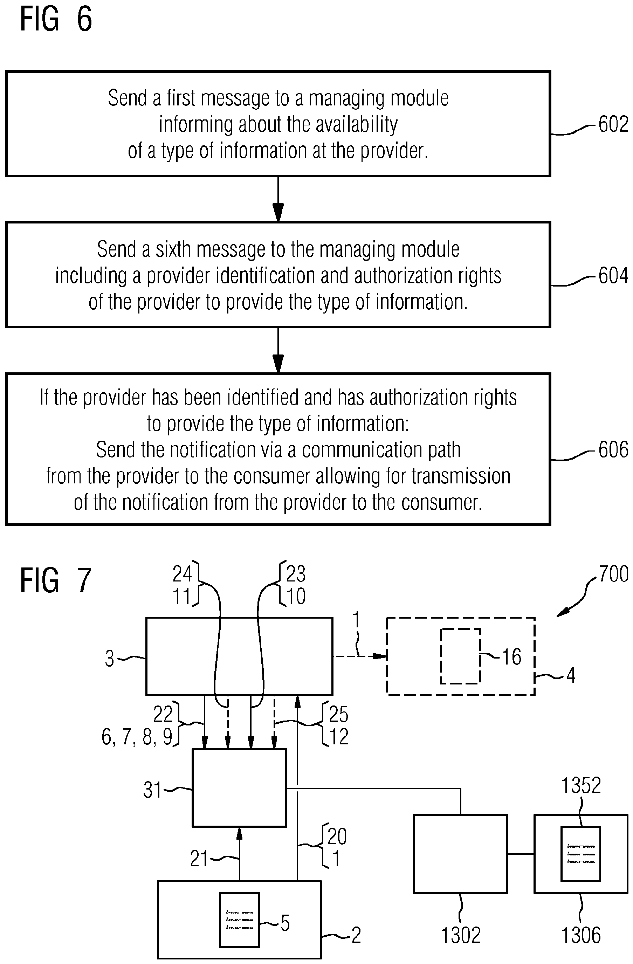

With reference to Fig. 6, a sixth example methodology is illustrated that facilitates providing a notification 1 from a provider 2 to a consumer 3 for providing the notification 1 to a user group 4.

The method may start, may then include several acts carried out through operation of at least one processor 1302, and may then end.

These acts may include an act 602 of sending a first message 21 to a managing module 31 informing about the availability of a type of information 5 at the provider 2; an act 604 of sending a sixth message 26 to the managing module 31 including a provider identification 14 and provider authorization rights 15 to provide the type of information 5; and an act 606 of sending the notification 1 via a communication path 20 from the provider 2 to the consumer 3 allowing for transmission of the notification 1 from the provider 2 to the consumer 3 if the provider 2 has been identified and has authorization rights 15 to provide the type of information 5.

Fig. 7 illustrates a scheme of a first exemplary system 700 that facilitate providing a notification 1 from a provider 2 to a consumer 3 for providing the notification 1 to a user group 4.

The system includes a processor 1302 configured via executable instructions 1352 included in at least one memory 1306 to receive a first message 21 from the provider 2 informing about the availability of a type of information 5 at the provider 2; receive a second message 22 from the consumer 3 including a consumer identification 6, a user group identification 7, consumer access rights 8, and user group access rights 9 to receive types of information 5; receive a third message 23 from the consumer 3 including a request 10 to receive the type of available information 5; check the consumer identification 6, user group identification 7, consumer access rights 8, and user group access rights 9 to receive the requested type of available information 5; and if the consumer 3 and the user group 4 have been identified and have access rights 8, 9 to receive the requested type of available information 5: establish a communication path 20 from the provider 2 to the consumer 3 allowing for transmission of the notification 1 from the provider 2 to the consumer 3.

Optionally, the processor 1302 is further configured to cause to provide the notification 1 to the user group 4 by sending a text message 16 to the user group 4 or by displaying the notification 1 in a display 16 with a graphical user interface to the user group 4.

According to a further option, the processor 1302 is further configured to receive a fourth message 24 from the consumer 3 including a query 11 on the types of available information 5. According to yet another option, the processor 1302 is further configured to send a fifth message 25 to the consumer 3 including first data 12 on the availability of the type of information 5.

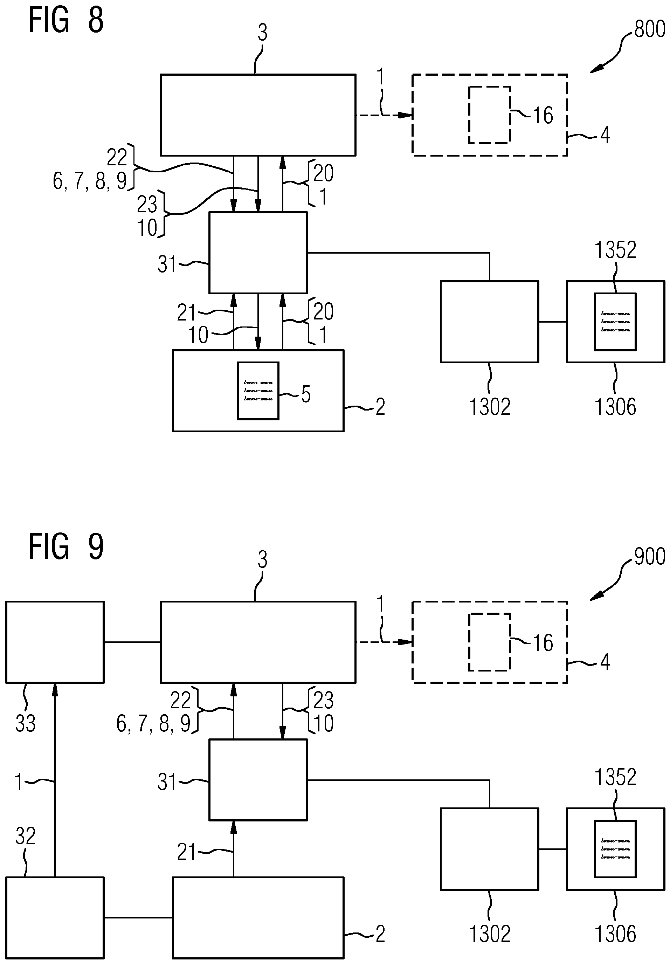

Fig. 8 illustrates a scheme of a second exemplary system 800 that facilitate providing a notification 1 from a provider 2 to a consumer 3 for providing the notification 1 to a user group 4.

The processor 1302 may be configured similar to the one of first exemplary system 700. According to the present second exemplary system 800, the processor 1302 is further configured to send the request 10 of the consumer 3 to receive the type of available information 5 to the provider 2; receive the notification 1 from the provider 2; and if the consumer 3 and the user group 4 have been identified and have access rights 8, 9 to receive the requested type of available information 5: send the notification 1 to the consumer 3.

Fig. 9 illustrates a scheme of a third exemplary system 900 that facilitate providing a notification 1 from a provider 2 to a consumer 3 for providing the notification 1 to a user group 4.

The processor 1302 may be configured similar to the one of first exemplary system 700. According to the present third exemplary system 900, the processor 1302 is further configured to cause to create a sending module 32 in the provider 2 specific to the type information 5; cause to create a receiving module 33 in the consumer 3 specific to the type information 5; and cause the sending module 32 of the provider 2 to send the notification 1 to the receiving module 33 of the consumer 3.

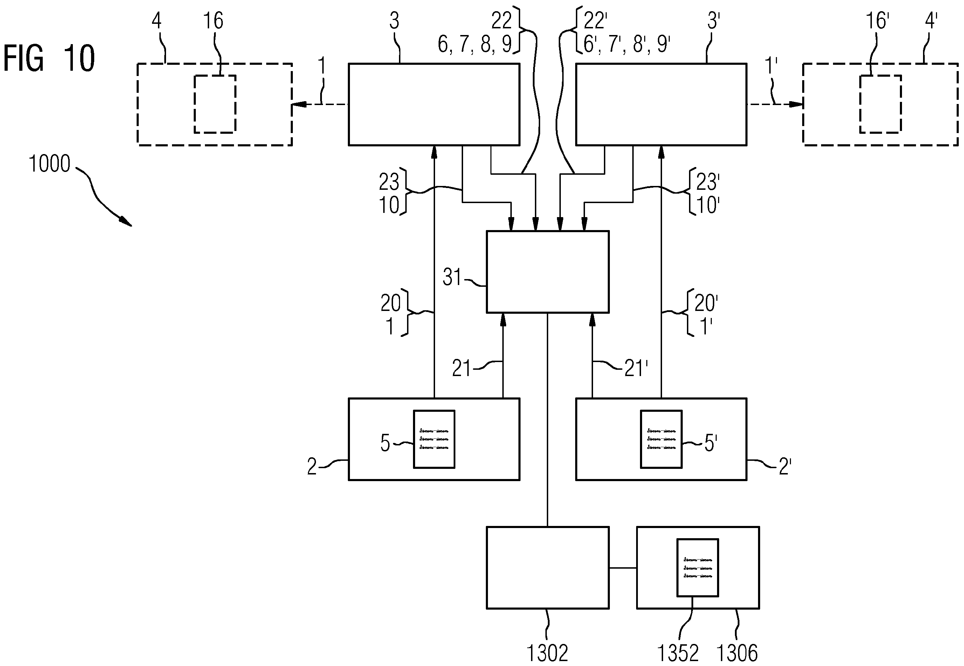

Fig. 10 illustrates a scheme of a fourth exemplary system 1000 that facilitate providing a notification 1 from a provider 2 to a consumer 3 for providing the notification 1 to a user group 4.

The processor 1302 may be configured similar to one of the first, second or third exemplary system 700, 800, 900. According to the present fourth exemplary system 1000, two providers 2, 2', two consumers 3, 3', two user groups 4, 4' are present, whereby the processor 1302 may be configured to carry out similar steps than those explained in the context of the first, second or third exemplary system 700, 800, 900.

It is worth noticing that the managing module 31 may establish a first communication path 20 between the provider 2 and the consumer 3 for provision of the notification 1 from the provider 2 to the consumer 3 for provision to the user group 4. The managing module 31 may further establish a second communication path 20' between the provider 2' and the consumer 3' for provision of the notification 1' from the provider 2' to the consumer 3' for provision to the user group 4'. Furthermore, by way of example, the managing module 31 may establish a first further communication path 20'' (not illustrated) between the two providers 2, 2' and the consumer 3 (and optionally to the consumer 3') for provision of a notification 1" from the providers 2, 2' to the consumer 3 (and optionally to the consumer 3') for provision to the user group 4 (and optionally to the user group 4'). In another example embodiments, the managing module 31 may establish a second further communication path 20'" (not illustrated) between the provider 2 and the consumers 3, 3' for provision of a notification 1'" from the provider 2 to the consumers 3, 3' for provision to the user group 4 and to the user group 4'. In addition, further combinations involving two or more providers and/or two or more consumers may be realized.

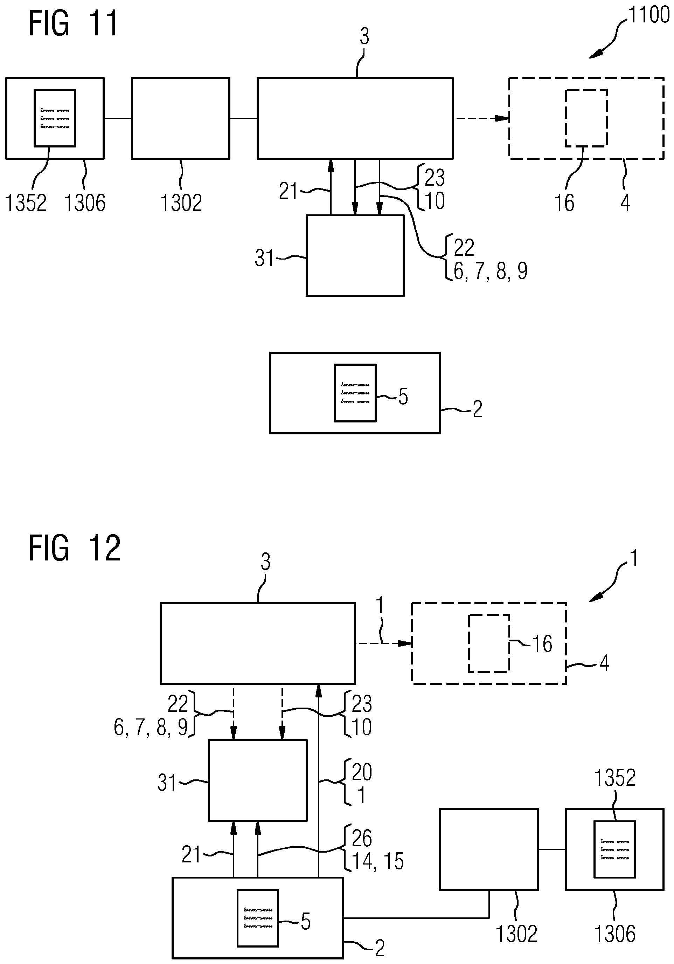

Fig. 11 illustrates a scheme of a fifth exemplary system 1100 that facilitate providing a notification 1 from a provider 2 to a consumer 3 for providing the notification 1 to a user group 4.

The system includes a processor 1302 configured via executable instructions 1352 included in at least one memory 1306 to receive a first message 21 informing about the availability of a type of information 5 at the provider 2; send a second message to a managing module including a consumer identification, a user group identification, consumer access rights, and user group access rights receive types of information; send a third message 23 to the managing module 31 including a request 10 to receive the type of available information 5; and if the consumer 3 and the user group 4 have been identified and have access rights 8, 9 to receive the requested type of available information 5: receiving the notification 1 via a communication path 20 from the provider 2 to the consumer 3.

By way of example the first message 21 may be sent to the consumer 3 by the managing module 31 or the provider 2. Optionally, the processor 1302 is further configured to provide the notification 1 to the user group 4 by sending a text message 16 to the user group 4 or by displaying the notification 1 in a display 16 with a graphical user interface to the user group 4.

According to a further option (not illustrated), the processor 1302 is further configured to send a fourth message 24 including a query 11 on the types of available information 5. According to yet another option (not illustrated), the processor 1302 is further configured to receive a fifth message 25 including first data 12 on the availability of the type of information 5.

Fig. 12 illustrates a scheme of a sixth exemplary system 1200 that facilitate providing a notification 1 from a provider 2 to a consumer 3 for providing the notification 1 to a user group 4.

The system includes a processor 1302 configured via executable instructions 1352 included in at least one memory 1306 to send a first message 21 to a managing module 31 informing about the availability of a type of information 5 at the provider; send a sixth message 26 to the managing module 31 including a provider identification 14 and provider authorization rights 15 to provide the type of information 5; and if the provider 2 has been identified and has authorization rights 15 to provide the type of information: send the notification 1 via a communication path 20 from the provider 2 to the consumer 3 allowing for transmission of the notification 1 from the provider 2 to the consumer.

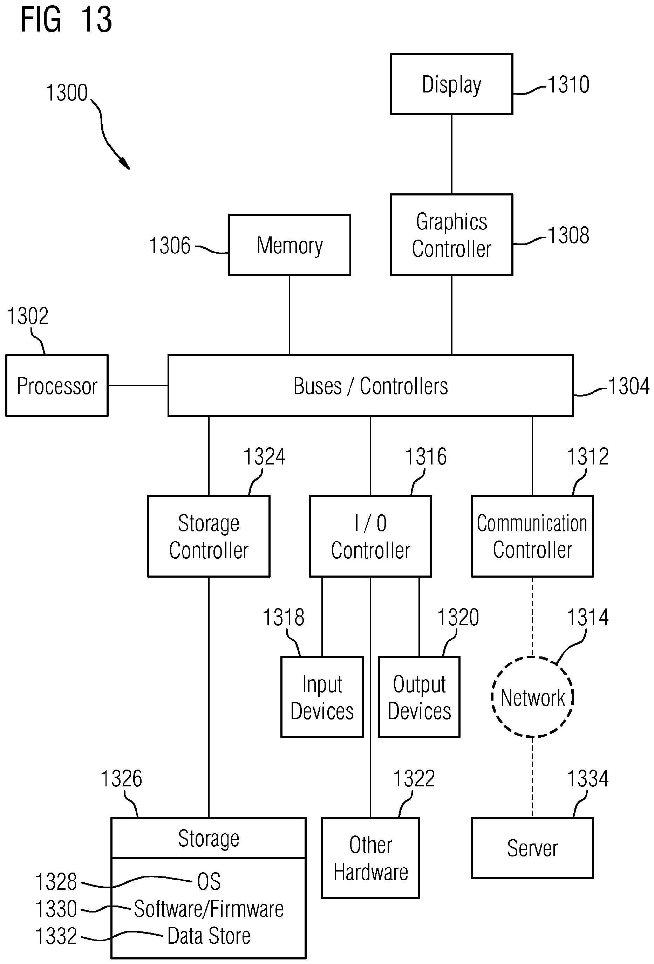

Fig. 13 illustrates a block diagram of a data processing system 1300 (also referred to as a computer system) in which an embodiment can be implemented, for example, as a portion of a system operatively configured by software or otherwise to perform the processes as described herein. The data processing system depicted includes at least one processor 1302 (e.g., a CPU) that may be connected to one or more bridges/controllers/buses 1304 (e.g., a north bridge, a south bridge). One of the buses 1304, for example, may include one or more I/O buses such as a PCI Express bus. Also connected to various buses in the depicted example may include a main memory 1306 (RAM) and optionally a graphics controller 1308. The optional graphics controller 1308 may be optionally connected to one or more display devices 1310. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1312 (Ethernet controllers, WiFi controllers, cellular controllers) operative to connect to a local area network (LAN), Wide Area Network (WAN), a cellular network, and/or other wired or wireless networks 1314 or communication equipment.

Further components connected to various busses may include one or more I/O controllers 1316 such as USB controllers, Bluetooth controllers, and/or dedicated audio controllers (connected to speakers and/or microphones). It should also be appreciated that various peripherals may be connected to the I/O controller(s) (via various ports and connections) including input devices 1318 (e.g., keyboard, mouse, pointer, touch screen, touch pad, drawing tablet, trackball, buttons, keypad, game controller, gamepad, camera, microphone, scanners, motion sensing devices that capture motion gestures), output devices 1320 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1302 may be integrated into a housing (such as a tablet) that includes a touch screen that serves as both an input and display device. Further, it should be appreciated that some input devices (such as a laptop) may include a plurality of different types of input devices (e.g., touch screen, touch pad, keyboard). Also, it should be appreciated that other peripheral hardware 1322 connected to the I/O controllers 1316 may include any type of device, machine, or component that is configured to communicate with a data processing system.

Additional components connected to various busses may include one or more storage controllers 1324 (e.g., SATA). A storage controller may be connected to a storage device 1326 such as one or more storage drives and/or any associated removable media, which can be any suitable non-transitory machine usable or machine-readable storage medium. Examples, include nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also in some examples, a storage device such as an SSD may be connected directly to an I/O bus 1304 such as a PCI Express bus.

A data processing system in accordance with an embodiment of the present disclosure may include an operating system 1328, software/firmware 1330, and data stores 1332 (that may be stored on a storage device 1326 and/or the memory 1306). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may include Microsoft Windows, Linux, UNIX, iOS, and Android operating systems. Also, examples of data stores include data files, data tables, relational database (e.g., Oracle, Microsoft SQL Server), database servers, or any other structure and/or device that is capable of storing data, which is retrievable by a processor.

The communication controllers 1312 may be connected to the network 1314 (not a part of data processing system 1300), which can be any public or private data processing system network or combination of networks, as known to those of skill in the art, including the Internet. Data processing system 1300 can communicate over the network 1314 with one or more other data processing systems such as a server 1334 (also not part of the data processing system 1300). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1302 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system may vary for particular implementations. For example, the data processing system 1300 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be included in a client device that communicates with the server (and/or a virtual machine executing on the server) through a wired or wireless network (which may include the Internet). In some embodiments, such a client device, for example, may execute a remote desktop application or may correspond to a portal device that carries out a remote desktop protocol with the server in order to send inputs from an input device to the server and receive visual information from the server to display through a display device. Examples of such remote desktop protocols include Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1300 may conform to any of the various current implementations and practices known in the art.

Also, it should be understood that the words or phrases used herein should be construed broadly, unless expressly limited in some examples. For example, the terms "include" and "include," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

In addition, the term "adjacent to" may mean: that an element is relatively near to but not in contact with a further element; or that the element is in contact with the further portion, unless the context clearly indicates otherwise.

Although an exemplary embodiment of the present disclosure has been described in detail, those skilled in the art will understand that various changes, substitutions, variations, and improvements disclosed herein may be made without departing from the spirit and scope of the disclosure in its broadest form.

## Claims

1. A method for providing a notification (1) from a provider (2) to a consumer (3) for providing the notification (1) to a user group (4), the method comprising, through operation of at least one processor (1302):
receiving a first message (21) from the provider (2) informing about the availability of a type of information (3) at the provider (2);
receiving a second message (22) from the consumer (4) including a consumer identification (6), a user group identification (7), consumer access rights (8), and user group access rights (9) to types of information (5);
receiving a third message (23) from the consumer (3) including a request (10) to receive the type of available information (5);
checking the consumer identification (6), the user group identification (7), the consumer access rights (8), and the user group access rights (9) to receive the requested type of available information (5); and
if the consumer (3) and the user group (4) have been identified and have access rights (8, 9) to receive the requested type of available information (5): establishing a communication path (20) from the provider (2) to the consumer (3) allowing for transmission of the notification (1) from the provider (2) to the consumer (3).

2. The method according to claim 1, further comprising through operation of the at least one processor (1302):
causing the consumer (3) to provide the notification (1) to the user group (4).

3. The method according to any one of the preceding claims, further comprising through operation of the at least one processor (1302):
receiving a fourth message (24) from the consumer (3) including a query (11) on the types of available information (5).

4. The method according to any one of the preceding claims, further comprising through operation of the at least one processor (1302):
sending a fifth message (25) to the consumer (3) including first data (12) on the availability of the type of information (5).

5. The method according to any one of the preceding claims, the notification (1) including second data about a change of information and/or the information.

6. The method according to any one of the preceding claims, further comprising through operation of the at least one processor (1302):
causing to create a sending module (32) in the provider (2) specific to the type information (5);
causing to create a receiving module (33) in the consumer (3) specific to the type information (5); and causing the sending module (32) of the provider (2) to send the notification (1) to the receiving module (33) of the consumer (3).

7. The method according to any one of the preceding claims, further comprising through operation of the at least one processor (1302):
sending the request (10) of the consumer (3) to receive the type of available information (5) to the provider (2) ;
receiving the notification (1) from the provider (2); and
if the consumer (3) and the user group (4) have been identified and have access rights (8, 9) to receive the requested type of available information (5): sending the notification (1) to the consumer (3).

8. The method according to any one of the preceding claims, further comprising through operation of the at least one processor (1302):
receiving a sixth message (26) from the provider (2) including a provider identification (14) and provider authorization rights (15) to provide a type of information (5);
checking the provider identification (14) and the provider authorization rights (15) to provide the type of information (5); and
if the provider (2) has been identified and has authorization rights (15) to provide the type of information (5): establishing a communication path (20) from the provider (2) to the consumer (3) allowing for transmission of the notification (1) from the provider (2) to the consumer (3).

9. The method according to any one of the preceding claims, wherein the consumer (3) is an application, e.g. a mobile app, a web application or a service, an artifact or a more complex software system which may, by way of example, be cloud-based.

10. The method according to any one of the preceding claims, wherein the user group (4) includes at least one tenant in a cloud platform and optionally at least one sub-tenant.

11. A method for receiving a notification (1) from a provider (2) by a consumer (3) for providing the notification (1) to a user group (4), the method comprising, through operation of at least one processor (1302):
receiving a first message (21) informing about the availability of a type of information (5) at the provider (2) ;
sending a second message (22) to a managing module (31) including a consumer identification (6), a user group identification (7), consumer access rights (8), and user group access rights (9) receive types of information (5);
sending a third message (23) to the managing module (31) including a request (10) to receive the type of available information (5); and
if the consumer (3) and the user group (4) have been identified and have access rights (8, 9) to receive the requested type of available information (5): receiving the notification (1) via a communication path (20) from the provider (2) to the consumer (3).

12. The method according to claim 11, further comprising through operation of the at least one processor (1302):
providing the notification (1) to the user group (4) by sending a text message (16) to the user group (4) or by displaying the notification (1) in a display (16) with a graphical user interface to the user group (4).

13. A method for providing a notification (1) to a consumer (3) for providing the notification (1) to a user group (4), the method comprising, through operation of at least one processor (1302):
sending a first message (21) to a managing module (31) informing about the availability of a type of information (5) at the provider (2);
sending a sixth message (26) to the managing module (31) including a provider identification (14) and provider authorization rights (15) to provide the type of information (5); and
if the provider (2) has been identified and has authorization rights (15) to provide the type of information (5): sending the notification (1) via a communication path (20) from the provider (2) to the consumer (3) allowing for transmission of the notification (1) from the provider (2) to the consumer (3).

14. A system for providing a notification (1) from a provider (2) to a consumer (3) for providing the notification (1) to a user group (4), the system (700) including at least one processor (1302) configured via executable instructions (1352) included in at least one memory (1306) to:
receive a first message (21) from the provider (2) informing about the availability of a type of information (5) at the provider (2);
receive a second message (22) from the consumer (3) including a consumer identification (6), a user group identification (7), consumer access rights (8), and user group access rights (9) to receive types of information (5) ;
receive a third message (23) from the consumer (3) including a request (10) to receive the type of available information (5);
check the consumer identification (6), user group identification (7), consumer access rights (8), and user group access rights (9) to receive the requested type of available information (5); and
if the consumer (3) and the user group (4) have been identified and have access rights (8, 9) to receive the requested type of available information (5): establish a communication path (20) from the provider (2) to the consumer (3) allowing for transmission of the notification (1) from the provider (2) to the consumer (3) .

15. A computer readable medium (1350) encoded with executable instructions (1352), that when executed, cause at least one processor (1302) to carry out a method according to any one of claims 1 to 13.
